# EUROPEAN PATENT APPLICATION

(11) **EP 3 101 393 A1**
(43) Date of publication of application: **07.12.2016**
(21) Application number: 16168665.4
(22) Date of filing: 06.05.2016
(51) Int. Cl.: G01C 23/00, G08G 5/00

(54) **MODIFYING THE APPEARANCE OF AN UPLINK MESSAGE WHEN THE UPLINK MESSAGE IS AFFECTED BY A FLIGHT INFORMATION MESSAGE**

(30) Priority: 26.05.2015 US 201514721576
(71) Applicant: Honeywell International Inc., Morris Plains, NJ 07950 (US)
(72) Inventor: SHAMASUNDAR, Raghu, Morris Plains, NJ New Jersey 07950 (US); KRISHNAMURTHY, Sundaresh Seethahally, Morris Plains, NJ New Jersey 07950 (US); JUDD, Thomas D., Morris Plains, NJ New Jersey 07950 (US)
(74) Representative: Houghton, Mark Phillip

(57) **Abstract**

An avionics display system is provided that modifies the appearance of an uplink message when the uplink message is affected by a flight information message. The avionics display system comprises a display device; and a processing device configured to: determine whether a flight information message affects an uplink message; and modify the displayed appearance of the uplink message on a display device when the uplink message is affected by the flight information message; wherein the display device is communicatively coupled to the processing device and located onboard an aircraft.

## Description

### BACKGROUND

Ground centers like Air Traffic Controllers (ATC) and Airline Operation Centers (AOC) send uplink messages, such as clearance messages, information messages, and request messages, to onboard aircraft systems in order to manage air traffic effectively. Uplink messages are comprised of uplink message elements that are displayed in decoded format on a display unit, such as a Control Display Unit (CDU) or graphical cockpit display, for pilot preview before responding to the message. The response taken may be loading the uplink message on to onboard systems such as the flight planning system on a Flight Management System (FMS). The response taken may be executing a change in route, altitude, speed, etc. Uplink message elements can include flight plan information such as route clearance data, altitude changes, speed changes, lateral offset data, route modifications such as departure/arrival procedure changes, runway changes, instructions to crew, and operational information, etc. Uplink messages and their corresponding uplink message elements are built by ground stations using information from navigational databases, available weather information, filed flight plans of aircrafts, current aircraft surveillance information, etc.

When creating a flight plan, flight crews are required to review various flight information messages, so that any possible hazards can be avoided. Flight information messages can include, but are not limited to: Flight Information Services (FIS), Notice to Airmen (NOTAM), Terminal Weather Information for Pilots (TWIP), meteorological information for aircraft in flight (VOLMET), runway visual range (RVR), Automatic Terminal Information Services (ATIS), and Temporary Flight Restrictions (TFR). Similar to uplink messages, each flight information message includes flight information message elements specific to a flight information message such as: a closed runway, an inoperable radio navigation aid, a restricted airspace caused by a military exercise, snow or ice status updates on a runway/taxiway, a volcanic ash update, and other hazards such as rocket launches, parachute jumps, and air shows, etc. However, these are only examples and not meant to be limiting. While flight crews are required to review flight information messages before creating a flight plan, late-breaking flight information messages can occur after a flight plan is created. These late-breaking flight information messages may affect a flight plan. If any late-breaking flight information messages are found to be relevant to a preexisting flight plan, a decision must then be made by the flight crew as to whether to modify the appearance of an uplink message and its corresponding uplink message elements and how to modify it.

For the reasons stated above and for the reasons stated below which will become apparent to those skilled in the art upon reading and understanding the specification, there is a need in the art for improved systems and methods for decreasing the heads down time during the occurrence of late-breaking flight information messages that may affect uplink message elements.

### SUMMARY

In one embodiment, an avionics display system comprises a display device, and a processing device. The processing device is configured to determine whether a flight information message affects an uplink message. The processing device is further configured to modify the displayed appearance of the uplink message on a display device when the uplink message is affected by the flight information message. The display device is communicatively coupled to the processing device and located onboard an aircraft.

### DRAWINGS

Understanding that the drawings depict only exemplary embodiments and are not therefore to be considered limiting in scope, the exemplary embodiments will be described with additional specificity and detail through the use of the accompanying drawings, in which:
Figures 1A-1B are block diagrams of example avionics systems for modifying the appearance of an uplink message when the uplink message is affected by a flight information message.
Figures 2A-2B are examples of displays on display devices that are displaying modified uplink messages or modified uplink message elements.
Figures 3A-3D are examples of displays on display devices that are displaying prioritized modified uplink messages or modified uplink message elements.
Figure 4 is a flow diagram of an example method for modifying the displayed appearance of an uplink message when the uplink message is affected by a flight information message.

In accordance with common practice, the various described features are not drawn to scale but are drawn to emphasize specific features relevant to the exemplary embodiments.

### DETAILED DESCRIPTION

In the following detailed description, reference is made to the accompanying drawings that form a part hereof, and in which is shown by way of illustration specific illustrative embodiments. However, it is to be understood that other embodiments may be utilized and that logical, mechanical, and electrical changes may be made. Furthermore, the method presented in the drawing figures and the specification is not to be construed as limiting the order in which the individual steps may be performed.

Some embodiments disclosed herein decrease the heads down time during the occurrence of late-breaking flight information messages by determining whether a flight information message and its corresponding flight information message element(s) affects an uplink message and its corresponding uplink message element(s). Throughout this disclosure, when a flight information message and its corresponding flight information message element(s) affect an uplink message and its corresponding uplink message element(s), it will be referred to as the flight information message affecting an uplink message. If the flight information message affects the uplink message, then the displayed appearance of the uplink message is modified. The modified uplink message is then displayed on an avionics display device for use by a flight crew. As a result, when a flight crew is reviewing an uplink message, the flight crew can see whether the uplink message is affected by a flight information message without having to review the flight information message and the uplink message separately and make a determination as to whether the flight information message affects the uplink message.

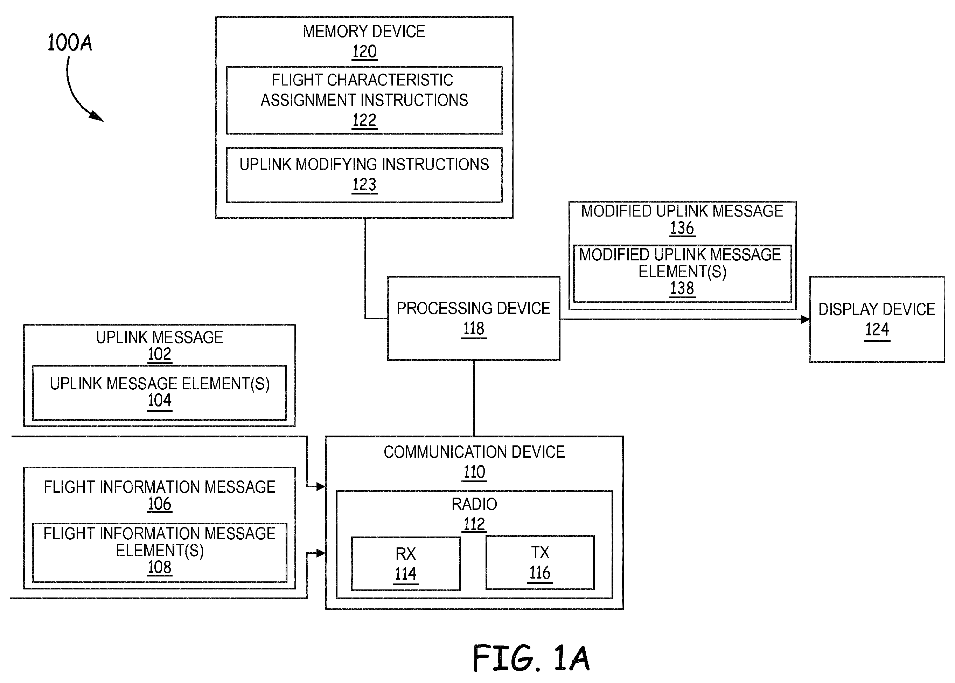

Figures 1A-1B are block diagrams of example avionics systems 100A, 100B for modifying the appearance of an uplink message 102 when the uplink message 102 is affected by a flight information message 106. As described above, in some implementations, an uplink message 102 is a communication message from a controller to a pilot for Air Traffic Control (ATC) communication. In other implementations, an uplink message 102 can be an Airline Operation Control (AOC) defined message. Examples of uplink messages 102 can include, but are not limited to, clearance messages, informational messages, and request messages. Each uplink message 102 is comprised of one or more uplink message elements 104. Specific examples of uplink message elements 104 can include, but are not limited to: level assignments, crossing constraints, lateral deviations, route changes and clearances (e.g., a waypoint change, an altitude change, etc.), speed assignments, radio frequency assignments, operation messages and various requests for information.

A flight information message 106 is a message that is pertinent to the safety and efficiency of a flight. Flight information messages 106 can include, but are not limited to, Flight Information Services (FIS), Notice to Airmen (NOTAM), Terminal Weather Information for Pilots (TWIP), meteorological information for aircraft in flight (VOLMET), runway visual range (RVR), Automatic Terminal Information Services (ATIS), and Temporary Flight Restrictions (TFR). Each flight information message 106 is comprised of one or more flight information message elements 108. Specific examples of flight information service message elements 108 include, but are not limited to, a military exercise, a snow or ice status update on a runway/taxiway, a volcanic ash update, and other hazards such as rocket launches, parachute jumps, and air shows.

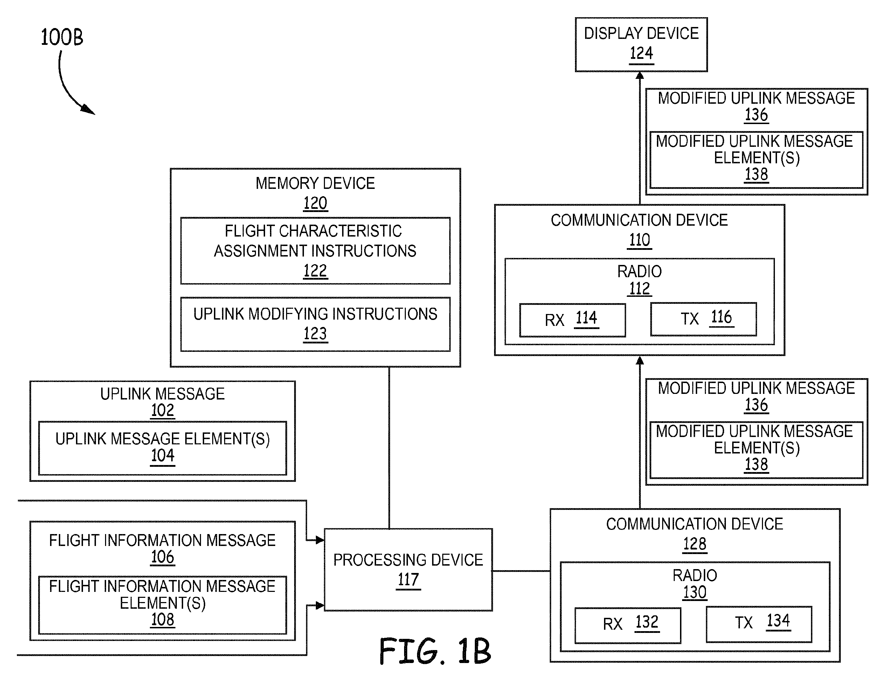

In some exemplary embodiments, an uplink message 102 is received over a datalink by the communication device 110 and processed by the processing device 118 in the aircraft, as shown in Figure 1A. Datalink subnetworks can include, but are not limited to, a high frequency (HF) datalink, a very high frequency (VHF) datalink and a satellite communication. In some other exemplary embodiments, an uplink message 102 is processed in a processing device 117 on the ground prior to being communicated to the aircraft via communication device 128, as shown in Figure 1B. Similarly, a flight information message 106 can be transmitted or received via datalink subnetworks and processed by the processing device 118 in the aircraft, as shown in Figure 1A. In some other exemplary embodiments, a flight information message 106 is processed by processing device 117 on the ground prior to sending the flight information message 106 to the aircraft via the communication device 128. In both scenarios, processing the flight information message 106 includes determining if an uplink message 102 is affected by the flight information message 106. Additionally, in both scenarios, the processing devices 117, 118 modify the appearance of the uplink message 102 such that the appearance of the uplink message 102 when displayed on the display device 124 is changed if the uplink message 102 is affected by the flight information message 106, as described below.

Referring to Figure 1A, the communication device 110 is located onboard an aircraft and is configured to receive uplink messages 102 and flight information messages 106.. In the example shown in Figure 1, the uplink messages 102 and flight information messages 106 can be received via a radio 112. The radio 112 includes a receiver 114 configured to receive radio frequency signals, as known to one having skill in the art. In some embodiments, the radio 112 can also include a transmitter 116 configured to transmit radio frequency signals. In some embodiments, the communication device 110 can be a communication management unit (CMU) of an aircraft or a communication management function (CMF). The communication device 110 is communicatively coupled to a processing device 118 located onboard the aircraft. As mentioned above, the processing device 118 is configured to modify the displayed appearance of an uplink message 102 if the uplink message 102 is affected by a flight information message 106. In some embodiments, the processing device 118 can be a flight management system (FMS) or a CMU/CMF.

In Figure 1B, the communication device 128 and the processing device 117 are not located onboard an aircraft. However, the processing device 117 is configured similar to the processing device 118, so that the processing device 117 modifies the displayed appearance of an uplink message 102 if the uplink message 102 is affected by a flight information message 106. For example, the processing device 117 can modify fields within the uplink message 102 or append data to the uplink message 102 that is interpreted by the processing device 118 or display 124 onboard the aircraft to modify the displayed appearance of the uplink message 102. Furthermore, modifying the displayed appearance of an uplink message 102 is defined to mean displaying the uplink message 102 differently than it would be displayed if it is not affected by a flight information message. For example, this can include displaying additional text, changing colors, changing fonts, underlining, highlighting, additional symbols, etc., as discussed in more detail below. In some instances, the modified appearance depends on the criticality of the parameter. Thus, a modified uplink message is defined to mean an uplink message including data which can be interpreted or used to change or modify the displayed appearance of the uplink message.

The processing device 117 is communicatively coupled to the communication device 128 that will send, via radio 130, a modified uplink message 136 and its corresponding modified uplink message elements 138 to a communication device 110 located onboard an aircraft. The modified uplink message 136 and its corresponding modified uplink message elements 138 are discussed below. The radio 130 includes a transmitter 134 configured to transmit radio frequency signals, as known to one having skill in the art. In some embodiments, the radio 130 can also include a receiver 132 configured to receive radio frequency signals.

After an uplink message element 104 and a flight information message element 108 are received by a processing device 117, 118, the processing device 117, 118 is configured to determine whether a flight information message 106 affects an uplink message 102. In at least one embodiment, it can be determined whether a flight information message element 108 affects an uplink message element 104 by configuring the processing devices 117, 118 to assign one or more flight characteristics to the uplink message element(s) 104 and one or more flight characteristics to the flight information message element(s) 108. If the one or more flight characteristics of the uplink message element 104 are the same as the one or more flight characteristics of the flight information message element 108, the processing devices 117, 118 determine that the flight information message element 108 affects the uplink message element 104. If the uplink message is affected by the flight information message, the modified uplink message will be displayed. If the uplink message is not affected by the flight information message, there is not change in the appearance of the uplink message.

Types of exemplary flight characteristics can include, but are not limited to, altitude, geographic areas, departure airports, arrival airports, departure or arrival runways, etc. As stated above, in exemplary embodiments, a flight characteristic can be assigned to each uplink message element(s) 104 and each flight information message element(s) 108 by the processing devices 117, 118, according to the flight characteristics assignment instructions 122 stored on a memory device 120. As an example, assume the flight characteristic is a geographic area. Furthermore, assume an aircraft is flying from the west coast of the United States to the east coast of the United States and a change in the flight plan is communicated to the communication device 110 from a controller that will result in the aircraft flying over Colorado Springs, CO instead of flying over Denver, CO, as the original flight plan dictated. As a result, the geographic area of Colorado Springs, CO can be assigned to that uplink message element 104 as a flight characteristic. Similarly, assume the United States Air Force is performing military exercises around Colorado Spring, CO and that information is included in a flight information message 106 and its corresponding flight information message element(s) 108. As a result, the geographic area of Colorado Springs, CO can be assigned to that flight information message element(s) 108 as a flight characteristic. As mentioned above, since the same flight characteristic (i.e., Colorado Springs, CO) is assigned to the uplink message element 104 and the flight information message element 108, the flight information message 106 and its corresponding flight information message element(s) 108 affect the uplink message 102 and its corresponding uplink message element(s) 104.

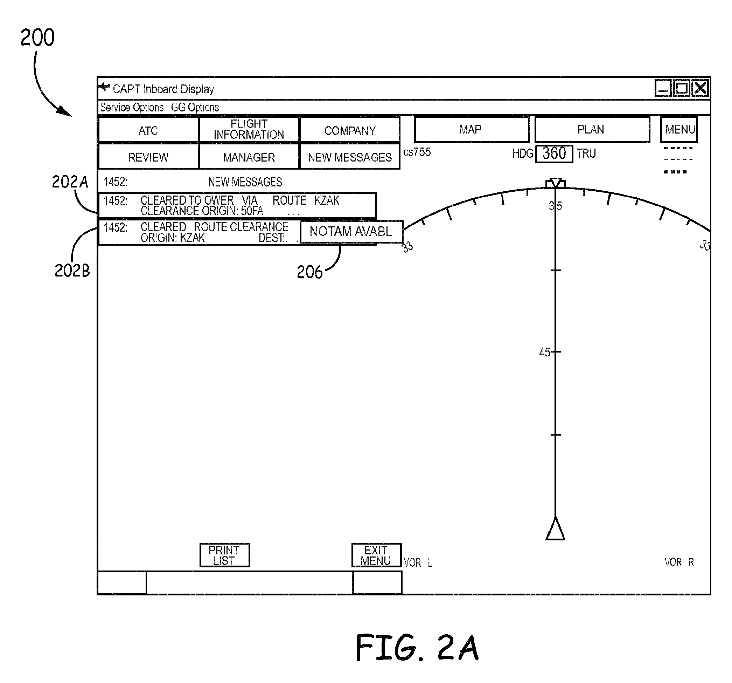

If an uplink message element 104 is affected by a flight information message element 108, then the processing devices 117, 118 are configured to modify the displayed appearance of the uplink message 102 and/or its corresponding uplink message elements 104 to create a modified uplink message 136 and/or modified uplink message element(s) 138, according to uplink modifying instructions 123 stored on a memory device 120. Modifying an uplink message 102 and its corresponding uplink message element(s) 104 will be referred to herein as modifying the uplink message 102. However, it is to be understood that either the uplink message 102, the uplink message elements 104 or both can be modified. Also, the modified uplink message 136 and its corresponding modified uplink message elements 138 will be referred to as the modified uplink message 136. The uplink message 102 can be modified in a number of ways to create the modified uplink message 136. Examples can include, but are not limited to, displaying an enclosure such as a circle, a box or other enclosure around the displayed uplink message 102. Other examples include, but are not limited to, appending a message to the uplink message 102. In some embodiments, the appended message comprises information from an onboard device like electronic flight bag (EFB), traffic computer, etc. for information such as maps, airport information, traffic, etc. to supplement the display of the communication message. The appended message can be located at the beginning, middle or end of a displayed uplink message 102. However, these are only examples and not meant to be limiting. Examples of modified messages and modified message elements are shown and discussed in Figures 2A-3D below.

Referring to Figure 1A, after the processing device 118 modifies the uplink message 102 to create the modified uplink message 136, a display device 124 located onboard an aircraft can be configured to display the modified uplink message 136. Referring to Figure 1B, after the processing device 117 modifies the uplink message 102, the communication device 128 can transmit the modified uplink message 136 to a communication device 110 located onboard an aircraft. After which, a display device 124 can interpret the modified data in the modified uplink message 136 to display the modified uplink message 136. In one embodiment, the display unit 124 can graphically represent messages, advisory support information, deviation request pages, and downlink reports. In other embodiments, the display unit 124 is a textual-based display. The display unit 124 can be implemented as any display unit which is capable of displaying textual and/or graphical content. Suitable exemplary display units include, but are not limited to, a display associated with an FMS or CMU/CMF, a multifunction display (MFD) or a Multifunction Control and Display Unit (MCDU). Suitable technologies for implementing the display unit 120 include, but are not limited to, a cathode ray tube (CRT) display, an active matrix liquid crystal display (LCD), a passive matrix LCD, or plasma display unit.

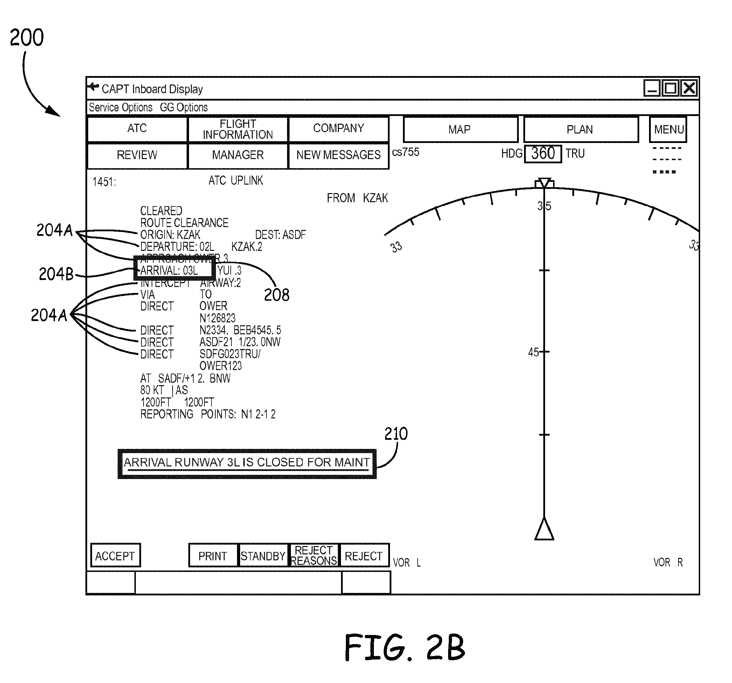

Figure 2A is an example of an exemplary display 200 on a display device that is displaying a modified uplink message 202B. As can be seen in Figure 2A, there is an uplink message 202A and a modified uplink message 202B. In this example, a message 206 is appended to the modified uplink message 202B. As a result, a pilot can see that the modified uplink message 202B is affected by a flight information message 106, specifically a NOTAM, without having to look at the modified uplink message 202B and a flight information message 106 separately and make that determination for himself. Display of the NOTAM can be configured to a specific color that indicates the criticality of the affected message. Thus, the amount of heads down time for the pilot and the pilot workload is reduced. If the flight crew then selects the modified uplink message 202B, the uplink message elements 204A and the modified uplink message element 204B for the modified uplink message 202B can be displayed on the display 200, as seen in Figure 2B. In this example, the modified uplink message element 204B has a box 208 enclosing it, denoting that the modified uplink message element 204B is affected by a flight information message 106. In some embodiments, the processing devices 117, 118 can be further configured to instruct a display device 124, 200 to display a description 210 of the flight information message 106 that affects the modified uplink message element 204B.

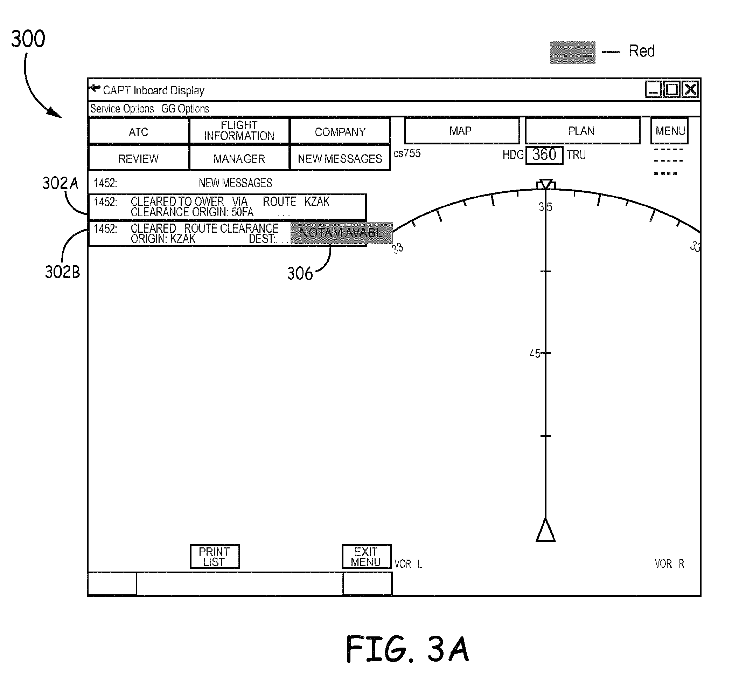

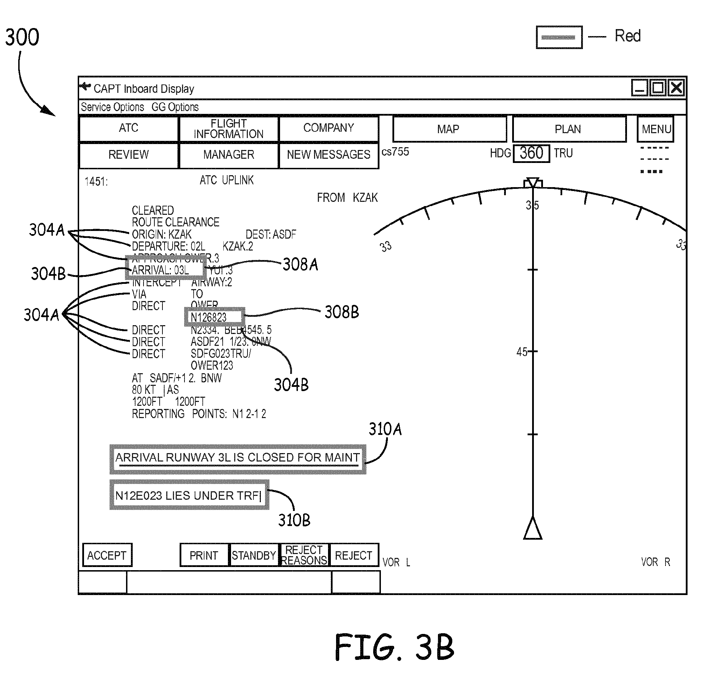

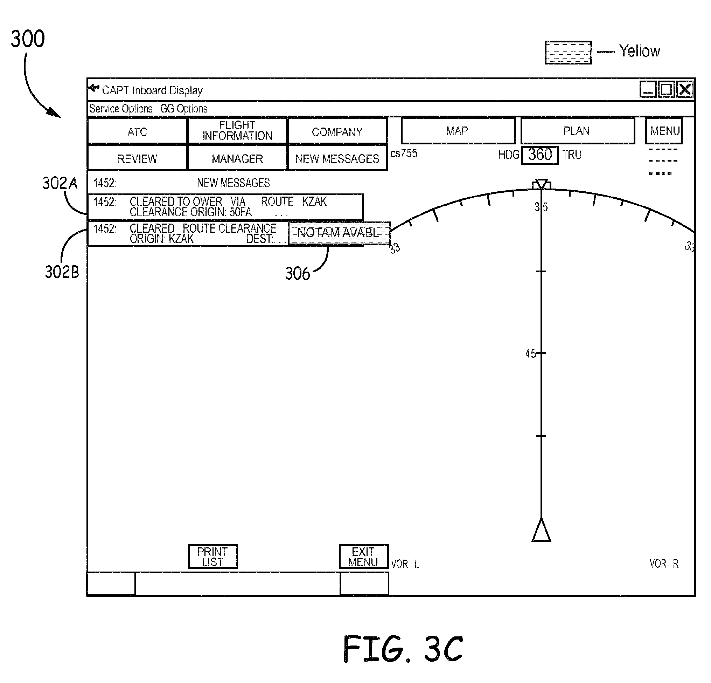

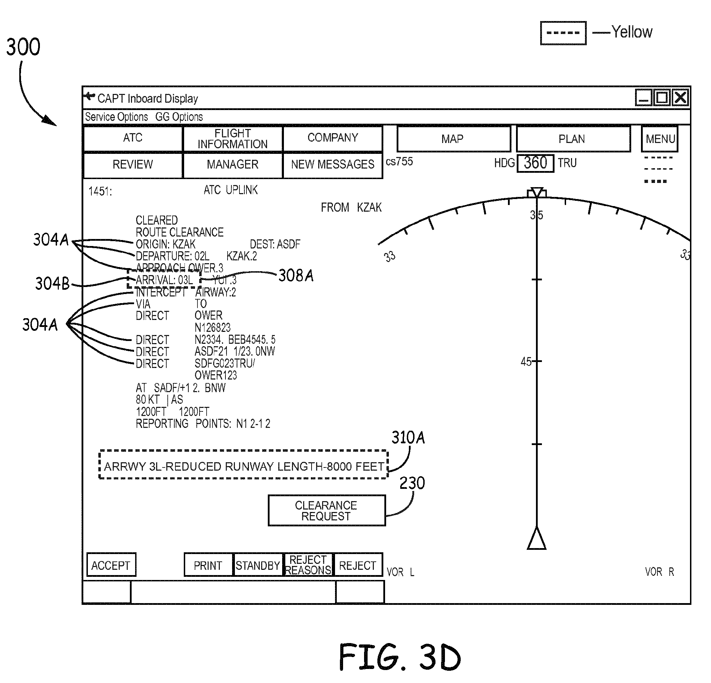

Furthermore, in some embodiments, the processing devices 117, 118 can be further configured to prioritize a modified uplink message 202B, as shown in Figures 3A-3D. In some of these embodiments, the processing device 117, 118 can be configured to prioritize the modified uplink message 136 using colors. In some embodiments, the colors can be red, yellow, and green, as shown in Figures 3A-3D. In these embodiments, red can indicate that flight crew intervention is required, as shown in Figure 3A and 3B, and yellow can indicate flight crew awareness is required, as shown in Figures 3C and 3D, and green indicates neither flight crew intervention nor flight crew awareness is required (not shown). In other embodiments, instead of using green to indicate neither flight crew intervention nor flight crew awareness is required, no color is used, as shown in Figures 2A-2B.

More specifically, in Figure 3A, there is an uplink message 302A and a modified uplink message 302B displayed on a the exemplary display 300 of a display device. Furthermore, a message 306 that is colored red is appended to the modified uplink message 302B. As a result, the flight crew knows that the modified uplink message 302B is affected by a flight information message 106 and intervention for the modified uplink message 302B is required. If the flight crew selects the modified uplink message 302B, the uplink message elements 304A and the modified uplink message elements 304B for the modified uplink message 302B can be displayed on the display 200, as seen in Figure 3B. Referring to Figure 3B, the two modified uplink message elements 304B have boxes 308A, 308B enclosing them, denoting that the modified uplink message elements 304B are affected by a flight information message 106. As a result, the flight crew can determine which specific modified uplink message element(s) 304B are effected. Moreover and similar to above, in some embodiments, the processing devices 117, 118 can be further configured to instruct the display device 300 to display descriptions 310A, 310B of the flight information message 106 that affects the modified uplink message elements 304B. In this example, the modified uplink message 302B and its respective modified uplink message elements 304B are prioritized to red because the runway that the aircraft was supposed to land on is closed for maintenance and landing position latitude and longitude coordinates (ex. N12E023 shown in Figure 3B) lie under Temporary Flight Restrictions (TFR). Other examples where the processing devices 117, 118 might prioritize a modified uplink message 136, 302B and its corresponding modified uplink message element(s) 138, 304B to red include, but are not limited to, substantial volcanic activity and war zones.

Figures 3C, 3D are similar to Figures 3A, 3B, respectively. However, Figures 3C and 3D show an embodiment where the flight information message 106 is not urgent enough to indicate to the flight crew that intervention is required, but instead, that the flight crew should be made aware that a flight information message 106 affects a modified uplink message 302A and its corresponding uplink message elements 304B. In this example, the modified uplink message 302A and its corresponding uplink message elements 304B are only prioritized to yellow because the runway is not closed, however, it is shortened to 8000 feet. Other examples where the processing devices 117, 118 might prioritize a modified uplink message 136, 302B and its corresponding modified uplink message element(s) 138, 304B to yellow include, but are not limited to, sporting events, military exercises, and minimal volcanic activity.

The processing devices 117, 118 can be implemented using software, firmware, hardware, or any appropriate combination thereof, as known to one of skill in the art. These may be supplemented by, or incorporated in, specially-designed application-specific integrated circuits (ASICs) or field programmable gate arrays (FPGAs). The processing device 104 can also include or function with software programs, firmware, or other computer readable instructions for carrying out various process tasks, calculations, and control functions used in the present embodiments.

The flight characteristic assignment instructions 122 and the uplink modifying instructions 123, executed by the processing devices 117, 118, are stored a memory device 120. The memory device 120 can be any appropriate tangible and non-transitory processor readable medium used for storage of processor readable instructions or data structures. Suitable processor readable media can include tangible media such as magnetic or optical media. For example, tangible media can include physical devices such as, but not limited to a conventional hard disk, compact disk (e.g., read only or re-writable), volatile or non-volatile media such as random access memory (RAM) including, but not limited to, synchronous dynamic random access memory (SDRAM), double data rate (DDR) RAM, RAMBUS dynamic RAM (RDRAM), static RAM (SRAM), etc.), read only memory (ROM), electrically erasable programmable ROM (EEPROM), and flash memory, etc.

The examples described above are not limited to uplink messages and can be applicable to other types of communication messages such as a downlink message. Further, the communication messages can be other flight information received from an onboard device such as electronic flight bag (EFB) or traffic computer, etc. In these examples, the communication message contains communication message elements similar to the uplink message elements discussed above. The communication message is received by the communication device via a datalink network along with the flight information message in the manner described in the embodiments above. One or more processing devices receive the messages from the communication device. If the communication message is affected by a flight information message element then the processing device(s) are configured to modify the displayed appearance of the communication message and its corresponding communication message elements to create a modified communication message. The communication message can be modified in a number of ways as described above in Figures 2A-3D with respect to the modified uplink message 136.

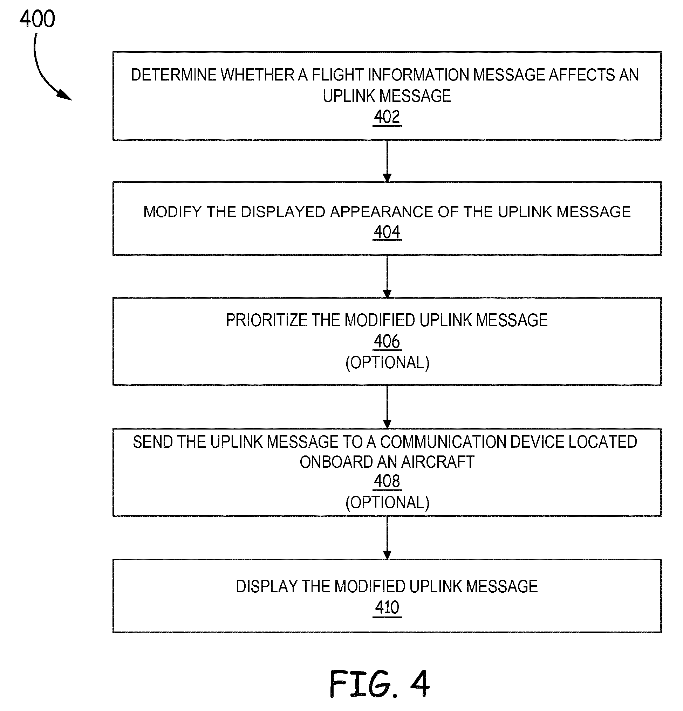

Figure 4 is a flow diagram of an example method 400 for modifying the displayed appearance of a communication message when the communication message is affected by a flight information message. The method 400 comprises determining whether a flight information message affects a communication message (block 402). The flight information message can be the same or similar to the flight information message(s) discussed above. For example, the flight information message can be comprised of flight information message elements, similar to the flight information message elements discussed above. Moreover, in some embodiments, a flight information message can include, but is not limited to, at least one of the following: Flight Information Services (FIS), Notice to Airmen (NOTAM), Terminal Weather Information for Pilots (TWIP), Automatic Terminal Information Services (ATIS), meteorological information for aircraft in flight (VOLMET), runway visual range (RVR), and Temporary Flight Restrictions (TFR). Furthermore, in some embodiments, the flight information message elements can include, but are not limited to, military exercise, severe weather updates, a snow or ice status update on a runway/taxiway, a volcanic ash update, and other hazards such as rocket launches, parachute jumps, and air shows.

Similarly, the communication message element can be the same or similar to the communication messages discussed above. For example, the communication message can be comprised of communication message elements, similar to the communication message elements discussed above. Moreover, in some embodiments, a communication message can include, but is not limited to, clearance messages, information messages, operational messages, and request messages. Furthermore, in some embodiments, a communication message element can include, but is not limited to, level assignments, crossing constraints, lateral deviations, route changes and clearances (e.g., a waypoint change, an altitude change, etc.), speed assignments, radio frequency assignments, operational messages and various requests for information.

In some embodiments, determining whether a flight information message element affects a communication message element can be the same as the embodiments described above. For example, determining whether a flight information message element affects a communication message element can comprise assigning a first flight characteristic of a plurality of flight characteristics to the communication message; assigning a second flight characteristic of the plurality of flight characteristics to the flight information message; and determining whether the first flight characteristic and the second flight characteristic are the same. The plurality of flight characteristics can be the same or similar to the flight characteristics described above. For example, the plurality of flight characteristics can include, but are not limited to, at least one of the following: a geographic area, a departure airport, an arrival airport, a departure runway, and an arrival runway.

Method 400 further comprises modifying the displayed appearance of the communication message when the communication message is affected by the flight information message (block 404). As discussed above, modifying the displayed appearance includes modifying the communication message to include data or information which can be used to modify the displayed appearance of the communication message. In some embodiments, this comprises modifying both the communication message and its respective communication message elements. Modifying a communication message and its corresponding communication message element(s) will be referred to herein as modifying the communication message. However, it is to be understood that either the communication message, the communication message elements or both can be modified. Furthermore, and similar to above, a modified communication message and its corresponding modified communication message elements will be referred to as a modified communication message. In some embodiments, the communication message can be modified in the same or a similar manner to how a communication message 102 is modified above. For example, an enclosure such as a circle, a box or other enclosure can enclose the communication message. Other examples include, but are not limited to, appending a message to the communication message. In some embodiments, the appended message comprises information from an onboard device like electronic flight bag (EFB), traffic computer, etc. for information such as maps, airport information, traffic, etc. to supplement the display of the communication message. Furthermore, the appended message can be located at the beginning, middle or end of a communication message. However, these are only examples and not meant to be limiting.

In some embodiments, method 400 further comprises prioritizing the modified communication message (block 406). In some of these embodiments, prioritizing the modified communication message can be the same or similar to the way the processing devices 117, 118 prioritize a modified communication message 136 above. For example, in some embodiments, prioritizing the modified communication message can comprises prioritizing the modified communication message using colors, such as are red, yellow, and green. In some such embodiments, the color red indicates flight crew intervention is required, yellow indicates flight crew awareness is required, and green indicates neither flight crew intervention nor flight crew awareness is required.

In some embodiments, method 400 further comprises sending the modified communication message from a first communication device located in a base station to a second communication device located onboard an aircraft (block 408).

Furthermore, method 400 comprises displaying the modified communication message based on the data used to change the displayed appearance of the modified communication message (block 410) In some embodiments, the modified communication message can be displayed on a display device located onboard an aircraft.

One or more actions described in the present methods can be implemented by computer executable instructions, such as program modules or components, which are executed by at least one processor. Generally, program modules include routines, programs, objects, data components, data structures, algorithms, and the like, which perform particular tasks or implemented particular abstract data types.

Instructions for carrying out the various process tasks, calculations, and generation of other data used in operation of the methods described herein can be implemented in software, firmware, or other computer- or processor-readable instructions. These instructions are typically stored on any appropriate computer program product that includes a computer readable medium used for storage of computer readable instructions or data structures. Such a computer readable medium can be any available media that can be accessed by a general purpose or special purpose computer or processor, or any programming logic device.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

### EXAMPLE EMBODIMENTS

Example 1 includes an avionics display system comprising: a display device; and a processing device configured to: determine whether a flight information message affects a communication message; and modify the displayed appearance of the communication message on a display device when the communication message is affected by the flight information message; wherein the display device is communicatively coupled to the processing device and located onboard an aircraft.

Example 2 includes the avionics display system of Example 1, wherein when the processing device is configured to determine whether a flight information message affects a communication message by comparing a flight characteristic assigned to the communication message with a flight characteristic assigned to the flight information message, wherein the flight information message affects the communication message if the flight characteristic of the communication message is the same as the flight characteristics of the flight information message.

Example 3 includes the avionics display system of Example 2, wherein the plurality of flight characteristics include at least one of the following: altitude, a geographic area, a departure airport, an arrival airport, a departure runway, and an arrival runway.

Example 4 includes the avionics display system of any of Examples 1-3, wherein the communication message is an uplink message.

Example 5 includes the avionics display system of any of Examples 1-4, wherein the communication message is flight information received from an onboard device such as an electronic flight bag (EFB) or a traffic computer.

Example 6 includes the avionics display system of Example 5, further comprising a first communication device located in the base station and a second communication device located onboard the aircraft, wherein the first communication device is configured to send the modified communication message to the second communication device.

Example 7 includes the avionics display system of any of Examples 1-6, wherein the processing device is further configured to prioritize the modified communication message.

Example 8 includes the avionics display system of Example 7, wherein the processing device is configured to prioritize the modified communication message using color, wherein a first color indicates flight crew intervention is required, a second color indicates flight crew awareness is required, and a third color indicates neither flight crew intervention nor flight crew awareness is required.

Example 9 includes the avionics display system of any of Examples 1-8, wherein the communication message is at least one of the following types of messages: a clearance message, an information message, or a request message.

Example 10 includes the avionics display system of any of Examples 1-9, wherein the flight information service message is at least one of the following types of messages: a notice to airmen message, a terminal weather information for pilots message, a meteorological information for aircraft in flight (VOLMET), runway visual range (RVR), an automatic terminal information services message, or a temporary flight restriction message.

Example 11 includes the avionics display system of any of Examples 1-10, wherein the processing device is further configured to instruct the display device to display a description of the flight information message that affects the communication message element.

Example 12 includes a method for modifying the displayed appearance of an communication message, the method comprising: determining whether a flight information message affects an communication message; modifying the communication message to include data used to modify the displayed appearance of the communication message when the communication message is affected by the flight information message; and displaying the communication message based on the modified information in the modified communication message.

Example 13 includes the method of Example 12, wherein determining whether a flight information message element affects an communication message element comprises: assigning a first flight characteristic of a plurality of flight characteristics to the communication message; assigning a second flight characteristic of the plurality of flight characteristics to the flight information message; and determining whether the first flight characteristic and the second flight characteristic are the same.

Example 14 includes the method of Example 13, wherein the plurality of flight characteristics includes at least one of the following: altitude, a geographic area, a departure airport, an arrival airport, a departure runway, and an arrival runway.

Example 15 includes the method of any of Examples 12-14, further comprising: sending the modified communication message from a first communication device located in a base station to a second communication device located onboard an aircraft.

Example 16 includes the method of any of Examples 12-15, further comprising prioritizing the modified communication message.

Example 17 includes the method of Example 16, wherein prioritizing the modified communication message comprises prioritizing the modified communication message using colors, wherein a first color indicates flight crew intervention is required, a second color indicates flight crew awareness is required, and a third color indicates neither flight crew intervention nor flight crew awareness is required.

Example 18 includes the method of any of Examples 12-17, wherein the communication message is at least one of the following types of messages: a clearance message, an information message, operational message, or a request message and wherein the flight information service message is at least one of the following types of messages: a notice to airmen message, a terminal weather information for pilots message, a meteorological information for aircraft in flight (VOLMET), runway visual range (RVR), an automatic terminal information services message, or a temporary flight restriction message.

Example 19 includes a non-transitory computer-readable medium having computer-executable instructions stored thereon which, when executed by one or more processors, cause the one or more processors to: determine whether a flight information message affects an uplink message; modify the uplink message to include data used to modify the displayed appearance of the uplink message when the uplink message is affected by the flight information message; and output instructions to a display device to display the uplink message based on the modified information in the modified uplink message.

Example 20 includes the non-transitory computer-readable medium of Example 19, wherein the program instructions are further configured to cause the one or more processors to determine whether a flight information message element affects an uplink message element by: assigning a first flight characteristic of a plurality of flight characteristics to the uplink message; assigning a second flight characteristic of the plurality of flight characteristics to the flight information message; and determining whether the first flight characteristic and the second flight characteristic are the same.

## Claims

1. An avionics display system comprising:
a display device; and
a processing device configured to:
determine whether a flight information message affects a communication message; and
modify the displayed appearance of the communication message on a display device when the communication message is affected by the flight information message;
wherein the display device is communicatively coupled to the processing device and located onboard an aircraft.

2. The avionics display system of claim 1, wherein when the processing device is configured to determine whether a flight information message affects a communication message by comparing a flight characteristic assigned to the communication message with a flight characteristic assigned to the flight information message, wherein the flight information message affects the communication message if the flight characteristic of the communication message is the same as the flight characteristics of the flight information message.

3. The avionics display system of claim 1, wherein the communication message is an uplink message.

4. The avionics display system of claim 1,
wherein the plurality of flight characteristics include at least one of the following: a geographic area, a departure airport, an arrival airport, a departure runway, and an arrival runway;
wherein the communication message is at least one of the following types of messages: a clearance message, an information message, or a request message; and
wherein the flight information service message is at least one of the following types of messages: a notice to airmen message, a terminal weather information for pilots message, an automatic terminal information services message, or a temporary flight restriction message.

5. The avionics display system of claim 1, wherein the processing device is further configured to prioritize the modified uplink message.

6. The avionics display system of claim 4, wherein the processing device is configured to prioritize the modified uplink message using color, wherein a first color indicates flight crew intervention is required, a second color indicates flight crew awareness is required, and a third color indicates neither flight crew intervention nor flight crew awareness is required.

7. The avionics display system of claim 1, wherein the processing device is further configured to instruct the display device to display a description of the flight information message that affects the uplink message element.

8. A method for modifying the displayed appearance of an communication message, the method comprising:
determining whether a flight information message affects an communication message;
modifying the communication message to include data used to modify the displayed appearance of the communication message when the communication message is affected by the flight information message; and
displaying the communication message based on the modified information in the modified communication message.

9. The method of claim 8, wherein determining whether a flight information message element affects an communication message element comprises:
assigning a first flight characteristic of a plurality of flight characteristics to the communication message;
assigning a second flight characteristic of the plurality of flight characteristics to the flight information message; and
determining whether the first flight characteristic and the second flight characteristic are the same.

10. The method of claim 8, further comprising prioritizing the modified communication message using colors, wherein a first color indicates flight crew intervention is required, a second color indicates flight crew awareness is required, and a third color indicates neither flight crew intervention nor flight crew awareness is required.
